# EUROPÄISCHE PATENTSCHRIFT

(11) **EP 1 625 467 B1**
(45) Veröffentlichungstag und Bekanntmachung des Hinweises auf die Patenterteilung: **09.01.2008**
(21) Anmeldenummer: 04720615.6
(22) Anmeldetag: 15.03.2004
(51) Int. Cl.: G06F 21/06

(54) **ELEKTRONISCHES ÜBERMITTELN VON DOKUMENTEN**
ELECTRONIC TRANSMISSION OF DOCUMENTS
TRANSMISSION ELECTRONIQUE DE DOCUMENTS

(30) Priorität: 14.03.2003 DE 10311634
(43) Veröffentlichungstag der Anmeldung: 15.02.2006
(73) Patentinhaber: Authentidate International AG, 40472 Düsseldorf (DE)
(72) Erfinder: WENDENBURG, Jan, 40237 Düsseldorf (DE); DAHM, Percy, 44577 Castrop-Rauxel (DE)
(74) Vertreter: Stute, Ivo Peter
(86) Internationale Anmeldenummer: PCT/EP2004/002653
(87) Internationale Veröffentlichungsnummer: WO 2004/082204

(56) Entgegenhaltungen:
- US-A1- 2002 019 937
- US-B1- 6 393 563

## Beschreibung

Die Erfindung betrifft ein Verfahren zur Übermittlung von signierten Daten bzw. Dokumenten.

In vielen Bereichen der Wirtschaft und Verwaltung wird heutzutage versucht, die papierbasierte Dokumentenbearbeitung und -verwaltung auf eine ausschließlich digitale Datenverarbeitung umzustellen, da Dokumente und Daten digital wesentlich einfacher archiviert und wiederbeschafft werden können. Um dabei einen sogenannten Medienbruch bei der Bearbeitung von Dokumenten zu vermeiden, besteht ein starkes Bestreben darin, Dokumente nicht nur innerhalb eines Unternehmens, sondern auch zwischen Unternehmen elektronisch auszutauschen. Ein wesentliches Problem bei dem Austausch von digitalen Daten und Dokumenten im Geschäftsverkehr besteht dabei in der Rechtsverbindlichkeit dieser Daten bzw. Dokumente. So ist es nicht ohne weiteres möglich, sicher festzustellen, von wem bestimmte Daten oder Dokumente versandt oder ob die Daten nach dem Versenden verändert worden sind.

Es gibt verschiedene Ansätze, Daten und Dokumente über digitale Signaturen zu authentifizieren. In diesem Zusammenhang wurden die EU-Signaturrichtlinie sowie in Deutschland das Signaturgesetz (SigG) und die Signaturverordnung (SigV) erlassen. Das Signaturgesetz unterscheidet im wesentlichen drei Erscheinungsformen elektronischer Signaturen, nämlich einfache, fortgeschrittene und qualifizierte elektronische Signaturen, wobei die Fälschungssicherheit der elektronischen Signaturen bei einer einfachen Signatur gering und bei einer qualifizierten elektronischen Signatur vergleichsweise hoch ist. Die Fälschungssicherheit qualifizierter Signaturen kann noch durch eine sogenannte Anbieter-Akkreditierung erhöht werden, was bedeutet, dass der Aussteller des Schlüsselpaares und des Zertifikats für die elektronische Signatur besondere Sicherheitskriterien erfüllt.

Je nach Art der Daten oder des Dokuments werden an die Sicherheit der elektronischen Signatur unterschiedliche Anforderungen gestellt, damit sie bzw. es nach elektronischer Übermittlung rechtliche Wirkung entfalten.

Ein besonderes Problem besteht beispielsweise in der steuerlichen Relevanz von elektronisch übermittelten Rechnungen. So kann nach zur Zeit in Deutschland geltendem Umsatzsteuergesetz eine in einer Rechnung ausgewiesene Umsatzsteuer vom Rechnungsempfänger nur dann steuerlich geltend gemacht werden, wenn die digitale Rechnung mit einer qualifizierten elektronischen Signatur versehen ist. Dies stellt insbesondere dann gegenüber in Papierform versandten Rechnungen ein erhebliches Problem dar, wenn ein Unternehmen eine Vielzahl von Rechnungen an eine Vielzahl von Empfänger verschickt. Selbst in vergleichsweise geschlossenen Benutzergruppen, beispielsweise den Nutzern des EDIFACT-Systems (Electronic Data Interchange Faktura), über das Bestelldaten, Lieferscheine und Rechnungsdaten im Rahmen eines komplexen Datenmodells zwischen Unternehmen ausgetauscht werden können, kommen digitale Signaturen nicht zur Anwendung. Um das Problem der steuerrechtlichen Anerkennung der über EDIFACT versandten elektronischen Rechnungen zu lösen, ist man dazu übergegangen, am Ende eines bestimmten Zeitraums, beispielsweise am Ende eines Monats, alle digital versandten Einzelrechnungen in einer Sammelrechnung zusammengefasst als Papierdokument auszudrucken und dann die Sammelrechnung an den Rechnungsempfänger zu versenden. Ein wesentlicher Nachteil dieser Methodik besteht darin, dass auf Empfängerseite die Sammelrechnung mit den einzelnen elektronisch versandten Rechnungen abgeglichen werden müssen. Diese Vorgehensweise ist daher aufwendig und unwirtschaftlich.

Eine weitere Problematik bei der Versendung von elektronischen Daten, insbesondere von Rechnungen, besteht darin, dass entsprechend den Grundsätzen zur Nachprüfbarkeit von digitalen Unterlagen (GDPDU) ein Verifikationsmechanismus notwendig ist, über den es dem Empfänger möglich ist, die Gültigkeit der digitalen Signatur zu überprüfen. Auch wenn es zum jetzigen Zeitpunkt kein gesetzliches Muss ist, die elektronischen Signaturen auf ihre Gültigkeit hin zu überprüfen, liegt es im Interesse jedes Empfängers, auf einen entsprechenden Gültigkeitsnachweis zurückgreifen zu können, um im Streitfall einen Nachweis für die Gültigkeit der Signatur zum Zeitpunkt ihrer Erstellung führen zu können.

Die US 2002/019937 A1 offenbart ein Verfahren gemäß dem ersten Teil des Anspruchs 1. Aus der US 2002/019937 A1 ist eine Datenübertragungssoftware bekannt, die die sichere Übertragung von rechtlich bindenden elektronischen Dokumenten zwischen Servern in einem Computernetzwerk vereinfacht. Die Übertragungssoftware beinhaltet vier Skripte, mit denen die Datenübertragung abgewickelt wird. Dabei wird auf einem Server eines Absenders ein Datenpaket mit einem elektronischen Dokument und Adressinformationen vorbereitet und an einen Empfängerserver übertragen. Auf dem Empfängerserver wird eine Erstüberprüfung des Datenpakets durchgeführt und das elektronische Dokument verarbeitet, sofern die erste Prüfung erfolgreich war. Das elektronische Dokument wird dann an den Absenderserver zurückgesandt, dort empfangen und weiterverarbeitet. Wenn das elektronische Dokument nicht die Erstprüfung besteht, wird es vom Empfänger direkt an den Absenderserver entsprechenden Weiterverarbeitung zurückgesandt.

Vor diesem Hintergrund liegt der vorliegenden Erfindung die Aufgabe zugrunde, ein Verfahren der eingangs genannten Art zur Verfügung zu stellen, das einen möglichst effizienten Austausch elektronischer Daten und Dokumente eines Absenders mit einer Vielzahl von Empfängern ermöglicht.

Diese Aufgabe wird gelöst mit einem Verfahren zum elektronischen Übermitteln von Daten mindestens eines Dokuments von einem Absender an einen Empfänger, insbesondere für das Übermitteln von Rechnungen, bei dem
a) die Daten vor dem Versenden vom Absender mit einer elektronischen Signatur versehen werden,
b) vor der Freigabe der Daten zur Übermittlung an den Empfänger eine Gültigkeitsprüfung zur elektronischen Signatur durchgeführt wird, bei der mindestens ein Zertifikat der elektronischen Signatur auf seine Gültigkeit überprüft wird, und
c) die Daten zusammen mit der elektronischen Signatur und einem mit der Gültigkeitsprüfung zur elektronischen Signatur erhaltenen Prüfprotokoll zur Signaturprüfung zur Übermittlung an den Empfänger freigegeben werden.

Mit diesem Verfahren wird es möglich, dass der Absender dem Empfänger elektronisch alle Informationen zur Verfügung stellt, die benötigt werden, um die Echtheit und rechtliche Verbindlichkeit der übermittelten Daten gegenüber dem Absender oder einem Dritten nachweisen zu können. Der Empfänger braucht die Daten lediglich zu archivieren, um auch noch lange Zeit nach Empfang der Daten einen solchen Nachweis führen zu können.

Da dieses System unabhängig vom Typ der zu übermittelnden Daten ist, müssen beim Empfänger keine aufwändigen Hard- und Softwareinstallationen eingerichtet werden, um an einem elektronischen Austausch von Rechnungen teilnehmen zu können. Insbesondere kann auf eine Infrastruktur zur Überprüfung von elektronischen Signaturen bzw. deren Zertifikaten, die in aller Regel aufgrund der Vielzahl verschiedener Signaturanbieter sehr aufwändig ist, verzichtet werden.

Da somit die Akzeptanz elektronischer Rechnungen bei Empfängern wesentlich erhöht werden kann, wird es für den Absender einfacher, sein gesamtes Rechnungssystem auf eine rein digitale Arbeitsweise umzustellen oder zumindest die Menge der auf Papier auszudruckenden und per Post zu versendenden Rechnungen oder anderen Dokumente auf ein Minimum zu reduzieren, wodurch die Dokumentenerstellungskosten und die Versandkosten erheblich verringert werden können.

Das erfindungsgemäße Verfahren kann ohne weiteres in bestehende Gesamtlösungen zur elektronischen Rechnungserstellung wie beispielsweise das EDIFACT-System eingefügt werden.

In einer bevorzugten Ausgestaltung des erfindungsgemäßen Verfahrens werden die Daten und/oder die elektronische Signatur mit einem ersten Zeitstempel, insbesondere einem ersten qualifizierten Zeitstempel, versehen.

Unter Zeitstempel wird hier und im folgenden ein Signaturschlüssel verstanden, der aus der Kodierung eines Prüfzifferncodes, der die mit dem Zeitstempel zu versehenden Daten identifiziert, und einer Zeitangabe zum Zeitpunkt der Erzeugung des Zeitstempels mit einem privaten Schlüssel eines asynchronen Kodierungsverfahrens entsteht und an den Prüfzifferncode und die Zeitangabe angehängt wird. Ein Zeitstempel ist dann qualifiziert, wenn er von einem Dienstleistungsanbieter erzeugt wird, der hierfür besonders akkreditiert ist, wie beispielsweise ein Trust-Center.

Durch die Verwendung von Zeitstempeln ist der Nachweis möglich, dass ein bestimmter Datensatz bereits zum Zeitpunkt des Erzeugens des Zeitstempels in unveränderter Form existiert hat, indem der Zeitstempel mit einem öffentlichen Schlüssel dekodiert wird und der erhaltene Prüfzifferncode mit einem Prüfzifferncode zum vorliegenden Datensatz verglichen wird. Sind beide Prüfzifferncodes identisch, ist auch der vorliegende Datensatz mit dem Datensatz identisch für den der Zeitstempel erzeugt worden ist.

Wird demnach ein Zeitstempel für die Daten und/oder die elektronische Signatur erzeugt, kann zu einem späteren Zeitpunkt festgestellt werden, ob die zu diesem Zeitpunkt vorliegenden Daten im Vergleich zu den ursprünglichen Daten unverändert sind oder nicht. Insbesondere kann damit auch nachgewiesen werden, dass das der Signatur zugrunde liegende Zertifikat zum Zeitpunkt der Signaturerstellung noch gültig war.

In einer weiteren bevorzugten Ausgestaltung des erfindungsgemäßen Verfahrens wird das Prüfprotokoll mit einem zweiten Zeitstempel, insbesondere einem zweiten qualifizierten Zeitstempel, versehen. Mit diesem zweiten Zeitstempel ist es möglich, den Nachweis zu führen, dass das Prüfprotokoll in unveränderter Form zum Zeitpunkt des Erzeugens der zweiten Signatur bestanden hat und insbesondere auch, dass das der zweiten Signatur zugrunde liegende Zertifikat zum Zeitpunkt der Signaturerstellung gültig war.

Wenn der zweite Zeitstempel zusätzlich alle zu übermittelnden Daten abbildet, kann unter Umständen auf einen ersten Zeitstempel für einen Identitätsnachweis von Dokumenten verzichten werden.

Damit der Nachweis geführt werden kann, dass das Prüfprotokoll auch tatsächlich von einer hierfür autorisierten Stelle geprüft worden ist, wird das Prüfprotokoll bevorzugt mit einer elektronischen Signatur der die Gültigkeit der elektronischen Signatur prüfenden Instanz versehen. Dies ist insbesondere dann von Vorteil, wenn der Empfänger der Daten nicht aktiv an der Prüfung ihrer Rechtsverbindlichkeit beteiligt ist, sondern lediglich das Prüfprotokoll erhält.

In einer anderen bevorzugten Ausführungsform des erfindungsgemäßen Verfahrens werden die zu übermittelnden Daten gegebenenfalls zusammen mit der elektronischen Signatur an einen ASP-Server übermittelt, wobei der ASP-Server die Gültigkeit der elektronischen Signatur überprüft und das Datenpaket aus Daten, elektronischer Signatur und Prüfprotokoll dem Empfänger zur Verfügung stellt. Der Begriff ASP-Server steht für "Application-Service-Provider" und ist ein Server, der entweder im Unternehmen selbst oder im Internet Softwaredienste für Dritte zur Verfügung stellt.

Grundsätzlich ist es möglich, dass der ASP-Server auch die Aufgabe übernimmt, die zu übermittelnden Daten mit einer den Absender identifizierenden Signatur zu versehen, sofern der Absender dem ASP-Server-Betreiber die entsprechenden Identifikationsinformationen zur Verfügung stellt. Darüber hinaus ist es möglich, dass der ASP-Server ebenfalls Archivierungsdienstleistungen für Absender und Empfänger anbietet.

Die für den Empfänger freigegebenen Daten, das sind insbesondere die zu übermittelnden Daten einschließlich der Signatur des Absenders und das Prüfprotokoll sowie gegebenenfalls ein erster und zweiter Zeitstempel und weitere Signaturen können dann dem Empfänger wahlweise abrufbar auf einem Server zur Verfügung gestellt werden, so dass der Empfänger beispielsweise über das Internet die für ihn bestimmten Daten von diesem Server abrufen kann. Alternativ oder in Ergänzung hierzu können die dem Empfänger zu übermittelnden Daten auch per E-Mail oder anderen elektronischen Datenübertragungswegen direkt übermittelt werden. Bei beiden Übermittlungsvarianten ist es von Vorteil, wenn die zu übermittelnden Daten verschlüsselt übertragen werden, so dass Dritte nicht ohne Weiteres die Daten einsehen können.

Im Folgenden wird die Erfindung anhand eines das Verfahren erläuternden Ablaufdiagramms für ein bevorzugtes Ausführungsbeispiel des Verfahrens näher erläutert.

Es zeigen
- Figur 1: eine Prinzipskizze der örtlichen Zuordnung der Arbeitsschritte des Verfahrens, und
- Figur 2: ein Ablaufdiagramm zur Datenverarbeitung.

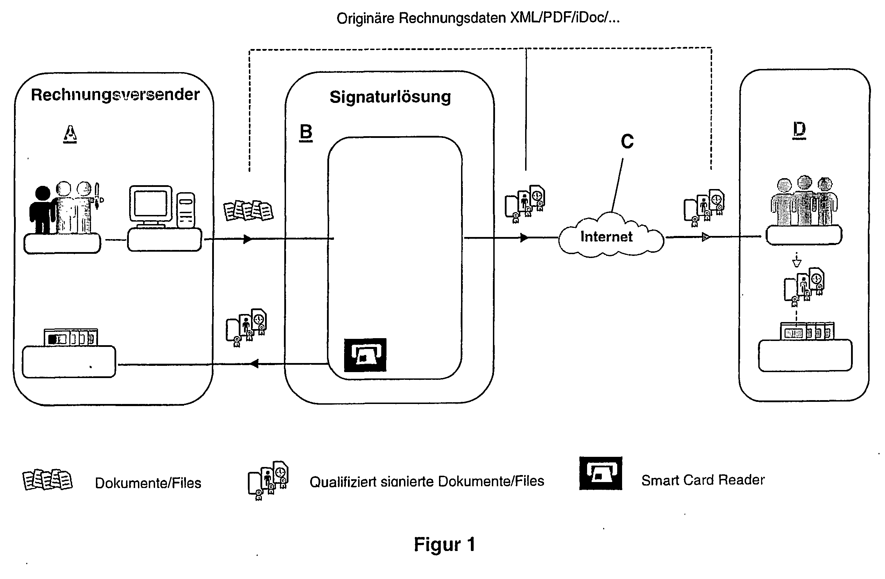

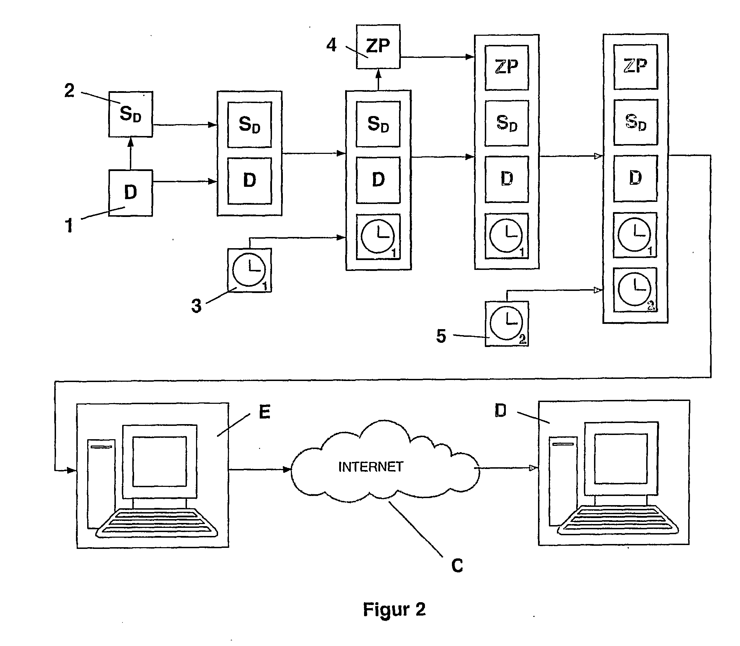

In Figur 1 ist diagrammartig dargestellt, wie die in einem Unternehmen **A** fertiggestellten Dokumente an einen Signaturdientsserver **B** weitergeleitet werden, dort mit notwendigen Signaturen und Prüfprotokollen versehen werden und zusammen mit den Signaturen und Prüfprotokollen zum einen an das Dokumentenarchiv des absendenden Unternehmens **A** sowie über das Internet **C** an einen Empfänger **D** übermittelt werden. Dabei kann der Signaturdienstserver entweder Bestandteil des EDV-Systems des Unternehmens **A** sein, oder aber auch ein über ein Netzwerk (Internet) mit dem Unternehmen **A** und gegebenenfalls dem Empfänger **D** verbundenen ASP-Server. Im Signaturdienstserver werden, wie in Figur **2** dargestellt ist, die Daten **1** mit einer elektronischen Signatur **2** und einem Zeitstempel **3** versehen. Das Erstellen der elektronischen Signatur **2** erfolgt automatisch, wobei die Signatur **2** neben einem den Absender identifizierenden Zertifikat darüber hinaus ein Attribut-Zertifikat enthalten kann, mit dem der Umfang der Vertretungsberechtigung des elektronisch Signierenden angegeben wird. Der Zeitstempel 3 identifiziert sinnvoller Weise sowohl die zu übermittelnden Daten **1** als auch die elektronische Signatur **2,** damit später insbesondere der Nachweis geführt werden kann, zu welchem Zeitpunkt die Daten **1** spätestens unterschrieben worden sind.

Der Signaturdienstserver nimmt darüber hinaus eine Signaturprüfung derart vor, dass er die in der Signatur enthaltenen Zertifikate auf ihre Gültigkeit hin prüft. Hierfür ist entweder in dem Signaturserver eine eigene Zertifikatsverwaltung enthalten, deren Datenstand regelmäßig mit den Daten eines oder verschiedener Zertifizierungsserver abgeglichen wird. Vorzugsweise werden jedoch die zu überprüfenden Zertifikate vom Signaturserver zur Gültigkeitsprüfung an den das Zertifikat ausstellenden Zertifizierungsserver übermittelt. Das mit der Prüfung erhaltene Prüfprotokoll **4** wird den zu übermittelnden Daten **1** sowie der elektronischen Signatur **2** und dem Zeitstempel **3** angehängt. Um einen Nachweis zu erhalten, welche Instanz die Zertifikatsprüfung durchgeführt hat, kann das Prüfprotokoll **4** von der ausstellenden Instanz ebenfalls mit einer elektronischen Signatur versehen werden.

Im Signaturdienstserver wird dann ein zweiter Zeitstempel **5** an die zu übermittelnden Daten einschließlich der Signatur und des gegebenenfalls signierten Prüfprotokolls **4** angehängt, wobei der Zeitstempel **5** selbst entweder durch den Signaturdiensteserver oder durch einen externen Zeitstempeldienst erzeugt wird.

Erst danach werden die zu übermittelnden Daten an den Empfänger freigegeben. Mit der Freigabe können die zu übermittelnden Daten beispielsweise per E-Mail an den Empfänger gesandt und alternativ oder zusätzlich dem Empfänger über ein sogenanntes Web-Portal **E** zur Verfügung gestellt werden.

## Patentansprüche

1. Verfahren zum elektronischen Übermitteln von Daten (1) mindestens eines Dokuments von einem Absender (A) an einen Empfänger (D), insbesondere für das Übermitteln von Rechnungen, bei dem
a) die Daten vor dem Versenden vom Absender mit einer elektronischen Signatur (2) versehen werden,
b) vor der Freigabe der Daten zur Übermittlung an den Empfänger eine Gültigkeitsprüfung zur elektronischen Signatur durchgeführt wird, bei der mindestens ein Zertifikat der elektronischen Signatur auf seine Gültigkeit überprüft wird, und
c) die Daten zusammen mit der elektronischen Signatur zur Übermittlung an den Empfänger freigegeben werden,
**dadurch gekennzeichnet, daß** in Schritt c) die Daten zusammen mit der elektronischen Signatur und einem mit der Gültigkeitsprüfung zur elektronischen Signatur erhaltenden -Prüfprotokoll (4) zur Übermittlung an den Empfängen freigegeben werden.

2. Verfahren nach Anspruch 1, **dadurch gekennzeichnet, dass** die Daten und/oder die elektronische Signatur mit einem ersten Zeitstempel (3), insbesondere einem ersten qualifizierten Zeitstempel, versehen werden bzw. wird, wobei ein qualifizierten Zeitstempel ein Zeitstempel ist, der von einem hierzu akkrediersten Dienstleistungsanbieten, insbesondere ein Trust-Center, erzeugt wird.

3. Verfahren nach Anspruch 1 oder 2, **dadurch gekennzeichnet, dass** das Prüfprotokoll mit einem zweiten Zeitstempel (5), insbesondere einem zweiten qualifizierten Zeitstempel, versehen wird, wobei ein qualifizierten Zeitstempel ein Zeitstempel ist, der von einem hierzu akkrediersten Dienstleistungsanbieten, insbesondere ein Trust-Center, erzeugt wird.

4. Verfahren nach Anspruch 3, **dadurch gekennzeichnet, dass** der zweite Zeitstempel alle zu übermittelnden Daten abbildet.

5. Verfahren nach einem der Ansprüche 1 bis 4, **dadurch gekennzeichnet, dass** das Prüfprotokoll mit einer elektronischen Signatur der die Gültigkeit der elektronischen Signatur prüfenden Instanz (B) versehen wird.

6. Verfahren nach einem der Ansprüche 1 bis 5, **dadurch gekennzeichnet, dass** ein ASP-Server (Application Service Provides-Seaves) die Gültigkeit der elektronischen Signatur überprüft und das Datenpaket aus Daten, elektronischer Signatur und Prüfprotokoll dem Empfänger zur Verfügung stellt.

7. Verfahren nach Anspruch 6, **dadurch gekennzeichnet, dass** die zu übermittelnden Daten vom ASP-Server mit einer den Absender identifizierenden Signatur versehen werden.

8. Verfahren nach einem der Ansprüche 1 bis 7, **dadurch gekennzeichnet, dass** die Daten einschließlich aller Signaturen und Zeitstempel dem Empfänger elektronisch, insbesondere über ein Web-Portal (E) im Internet (C), zum Abrufen zur Verfügung gestellt werden.

9. Verfahren nach einem der Ansprüche 1 bis 8, **dadurch gekennzeichnet, dass** die Daten einschließlich aller Signaturen und Zeitstempel dem Empfänger elektronisch, insbesondere per E-Mail über das Internet, übermittelt werden.

10. Verfahren nach einem der Ansprüche 1 bis 9, **dadurch gekennzeichnet, dass** mindestens ein Teil der zu übermittelnden Daten verschlüsselt wird.

## Claims

1. A method for the electronic transmission of data (1) of at least one document from a sender (A) to a receiver (D), particularly for the transmission of invoices,
wherein
a) the data is provided with an electronic signature (2) before being sent by the sender,
b) before the release of the data for transmission to the receiver, a validity test is performed on the electronic signature, in which at least a certificate of the electronic signature is checked for its validity, and
c) the data is released for transmission to the receiver together with the electronic signature
**characterised in that** in step c) the data together with the electronic signature and a test log (4) obtained with the validity test of the electronic signature are released for transmission to the receiver.

2. The method according to Claim 1, **characterised in that** the data and/or the electronic signature is/are provided with a first timestamp (3), particularly a first qualified timestamp, wherein a qualified timestamp is a timestamp that is generated by a service provider being accredited therefor, especially a trust-center.

3. The method according to Claim 1 or 2, **characterised in that** the test log is provided with a second timestamp (5), particularly a second qualified timestamp, wherein a qualified timestamp is a timestamp that is generated by a service provider being accredited therefor, especially a trust-center.

4. The method according to Claim 3, **characterised in that** the second timestamp representes all data to be transmitted.

5. The method according to one of Claims 1 through 4, **characterised in that** the test log is provided with an electronic signature of the instance (B) checking the validity of the electronic signature.

6. The method according to one of Claims 1 through 5, **characterised in that** an ASP server (Application Service Provider Server) checks the validity of the electronic signature and provides the data packet comprising data, electronic signature and test log to the receiver.

7. The method according to Claim 6, **characterised in that** the data to be transmitted is provided, by the ASP server, with a signature identifying the sender.

8. The method according to one of Claims 1 through 7, **characterised in that** the data, including all signatures and timestamps, is provided to the receiver electronically, particularly via a Web portal (E) in the Internet (C), to be retrieved.

9. The method according to one of Claims 1 through 8,
**characterised in that** the data, including all signatures and timestamps, is transmitted to the receiver electronically, particularly by e-mail via the Internet.

10. The method according to one of Claims 1 through 9, **characterised in that** at least a part of the data to be transmitted is encrypted.

## Revendications

1. Procédé de transmission électronique de données (1) d'au moins un document par un expéditeur (A) à un destinataire (D), en particulier pour la transmission de factures, dans lequel
a) les données sont munies avant l'envoi d'une signature électronique (2),
b) avant autorisation de la transmission des données au destinataire, on effectue un contrôle de validité de la signature électronique au cours duquel on vérifie la validité d'au moins un certificat de la signature électronique, et
c) on autorise la transmission au destinataire des données en commun avec la signature électronique,
**caractérisé en ce qu'**à l'étape c) on autorise la transmission au destinataire des données en commun avec la signature électronique et un compte rendu de contrôle (4) reçu avec le contrôle de validité de la signature électronique.

2. Procédé selon la revendication 1, **caractérisé en ce que** les données et/ou la signature électronique sont munies d'un premier timbre horodateur (3), en particulier d'un premier timbre horodateur qualifié, un timbre horodateur qualifié étant un timbre horodateur qui est généré par un fournisseur de services accrédité pour ce faire, en particulier un trust center ou centre d'authentification.

3. Procédé selon la revendication 1 ou 2, **caractérisé en ce que** le compte rendu de contrôle est muni d'un deuxième timbre horodateur (5), en particulier d'un deuxième timbre horodateur qualifié, un timbre horodateur qualifié étant un timbre horodateur qui est généré par un fournisseur de services accrédité pour ce faire, en particulier un trust center ou centre d'authentification.

4. Procédé selon la revendication 3, **caractérisé en ce que** le deuxième timbre horodateur représente toutes les données à transmettre.

5. Procédé selon l'une des revendications 1 à 4, **caractérisé en ce que** le compte rendu de contrôle est muni d'une signature électronique de l'instance (B) qui contrôle la validité de la signature électronique.

6. Procédé selon l'une des revendications 1 à 5, **caractérisé en ce qu'**un serveur ASP (Application Service Provider Server ou fournisseur de service d'application) contrôle la validité de la signature électronique et met à la disposition du destinataire le paquet de données composé des données, de la signature électronique et du compte rendu de contrôle.

7. Procédé selon la revendication 6, **caractérisé en ce que** les données à transmettre par le serveur ASP sont munies d'une signature qui identifie l'expéditeur.

8. Procédé selon l'une des revendications 1 à 7, **caractérisé en ce que** les données, y compris toutes les signatures et timbres horodateurs, sont mises à la disposition du destinataire électroniquement pour consultation, en particulier via un portail Web (E) sur Internet (C).

9. Procédé selon l'une des revendications 1 à 8, **caractérisé en ce que** les données, y compris toutes les signatures et timbres horodateurs, sont transmises au destinataire électroniquement, en particulier par courrier électronique via Internet.

10. Procédé selon l'une des revendications 1 à 9, **caractérisé en ce qu'**au moins une partie des données à transmettre est cryptée.
